# EUROPEAN PATENT SPECIFICATION

(11) **EP 0 617 796 B1**
(45) Date of publication and mention of the grant of the patent: **16.02.2000**
(21) Application number: 92924837.5
(22) Date of filing: 14.12.1992
(51) Int. Cl.: G01S 13/87, G01S 13/48, H01Q 3/26

(54) **A DIGITAL BEAMFORMING ARRAY**
DIGITALES STRAHLFORMUNGSARRAY
RESEAU CONFORMATEUR DE FAISCEAU DIGITAL

(30) Priority: 19.12.1991 GB 9126944
(43) Date of publication of application: 05.10.1994
(73) Proprietor: SECRETARY OF STATE FOR DEFENCE IN HER BRITANNIC MAJESTY'S GOV. OF THE UNITED KINGDOM OF GREAT BRITAIN AND NORTHERN IRELAND, London SW1A 2HB (GB)
(72) Inventor: DEAN, Michael 51 Hastings Road, Worcestershire WR14 2XE (GB)
(74) Representative: Beckham, Robert William
(86) International application number: PCT/GB92/02317
(87) International publication number: WO 93/12440

(56) References cited:
- EP-A- 0 224 014
- EP-A- 0 388 215
- US-A- 4 688 045
- US-A- 4 790 320
- PATENT ABSTRACTS OF JAPAN vol. 15, no. 306 (C-0856) 6 August 1991 & JP,A,3 114449 (YOKOGAWA MEDICAL)
- MACHINE DESIGN vol. 63, no. 25, July 1989, CLEVELAND US pages 79 - 84 B. SCHWEBER 'The pros and cons of sigma-delta converters'
- IEEE INTERNATIONAL SOLID STATE CIRCUITS CONFERENCE vol. 34, February 1991, NEW YORK US pages 64 - 65 B.P. BRANDT ET AL. 'A CMOS oversampling A/D converter with 12b resolution at conversion rates above 1MHz'

## Description

This invention relates to a digital beamforming array for use in radar applications and in particular in radar applications that use phased array technology.

In many radar applications there is increasing evidence that the next generation of sensors will use active phased array technology. Such sensors comprise an array of modules, each having its own independent transmitter and receiver. Electronically steered transmit and receive beams can be generated by suitable phasing of the input and output signals of the modules. This enables rapid beam steering without moving mechanical parts, giving enhanced potential for multi-mode operation and/or low cost implementation. Numerous developments of this technique have been described in the prior art. For example US 4 688 045 describes such phased array beamsteering, the phasing being achieved by selectively delaying the output of each module. The delays required are determined by a novel algorithm which relates these delays to the desired steering direction.

An important extension of active array technology is the technique of digital beamforming. Here each module has a dedicated analogue to digital converter and the beamforming process is accomplished in the digital domain. EP 0 224 014 is concerned with medical ultrasound imaging in which a high level of focusing accuracy is required. This document discloses the use of non-uniform sampling rates across array components in order to overcome the limitation of time delay resolution to the sampling period, and corresponding bandwidth limitation to one half the sampling rate of the analogue to digital convener.

One particular analogue to digital converter usable in both radar and ultrasonic applications is the delta sigma converter. Such converters are described in more detail hereinbelow and in JP 3 114 449. Briefly, they comprise a high-speed one-bit analogue to digital converter (a delta sigma tracker) and a decimating filter which converts this one-bit data to a multi-bit output. JP 3 114 449 discloses how a reduction in complexity of phased array ultrasonic devices can be achieved by implementing the time delays at the one-bit stage. The delayed one-bit data streams are summed in an adder and the decimating filer is then applied to the adder output. Conventionally the time delays had been applied to the multi-bit delta sigma converter outputs. Since only a single decimating filter is used, rather than one per channel as used in the conventional method, the device described in JP 3 114 449 achieves an overall reduction in device complexity. In some described embodiments smaller groups of one-bit data streams are time delayed and fed into respective adders and cascaded time delay and adder stages are used to generate the final summed output. This output is again input to a single decimating filter.

Digital beamforming enables multiple receive beams to be implemented without the need for many bulky analogue beamforming manifolds. This ability to realise multiple receive beams is vital if monopulse or other precision target bearing determination schemes are to be implemented. Also the ability to sample the output of each module independently allows the implementation of adaptive beamforming and super-resolution algorithms, which are currently reaching a high degree of maturity.

Furthermore, the algorithmic nature of the beamforming process means that it is possible for variations in the phase and amplitude responses of individual modules to be calibrated out by software means.

Balanced against these advantages of digital beamforming is the significant sensor cost penalty that can result from the requirement that each module has its own analogue to digital converter and the potentially high cost of the signal processing hardware required to implement the digital beamforming algorithm.

The present invention provides a digital beamforming array combining a reduction in complexity and cost with all the advantages of digital beamforming mentioned above.

According to a first aspect of the present invention there is provided a digital beamforming array including:
(a) a plurality of sensor modules for generating intermediate frequency (IF) signals from received signals;
(b) digitising means to convert the IF signals to n-bit digital signals at an oversampling rate, where n is less than the number of bits required to represent the IF signal dynamic range;
(c) beamforming means for altering the phases of the digital signals relative to one another and combining them to form a resultant signal; and
(d) decimating means for converting the resultant signal to a multi-bit signal with a number of bits equal to at least that required to represent the IF signal dynamic range;
characterised in that the array also includes weighting means to provide for the digital signals to incorporate non-uniform weighting prior to formation of the resultant signal.

Incorporation of a non-uniform weighting at this stage of the beamforming process allows implementation of adaptive beamforming and super-resolution algorithms and for variations in the phase and amplitude responses of individual modules to be calibrated out by software means. In many applications this invention can be applied in order to improve the sidelobes of the resulting patterns.

The weighting means may be arranged to provide for non-uniform amplitude weighting to counteract variation in sensor module characteristics and / or to improve array sidelobe characteristics.

The beamforming process according to the present invention involves the combination of suitably phase shifted n-bit representations of the sensor module outputs. This would appear to involve high-speed complex digital multiplications.

However, in a preferred embodiment of the present invention the beamforming process can be implemented by a beamforming means which includes respective time delay means for each digitising means arranged to delay the digital signals relative to one another and the beamforming means includes at least one adding means ranged to add together signals of a set of delayed signals.

In a beamforming array according to the present invention the output of each digitising means can be regarded as a representation of the output of the relevant sensor module. If the digitising means oversamples by a factor Q, then each n-bit output forms a series of discrete signals which represent the output of the relevant sensor module at intervals in phase of 2π/Q. The beamforming process aims primarily to remove phase differences between received signals which result from the angle of incidence of a received beam on the spatially separated ray of sensor modules. This process is generally carried out by altering the phase angles of the received signals relative to one another in a predetermined manner depending on the said angle of incidence. In this preferred embodiment of the present invention beamforming can be achieved simply by time delaying the n-bit outputs relative to one another, which is equivalent to delaying the outputs by multiples of 2π /Q in phase angle relative to one another and then adding the n-bit outputs so delayed. Therefore, this preferred embodiment of the present invention significantly reduces the cost and complexity of the signal processing hardware required to implement the beamforming process.

For applications where it is necessary to implement more than one receive beam, preferably the beamforming means includes a plurality of adding means each arranged to add together signals of a respective set of delayed signals as appropriate to form multiple beams. Incident beams may arrive at the ray from a spread of directions and so it may be necessary in some applications to implement the beams in a number of different directions within this spread. The present invention is easily adapted for this purpose because different sets of signals, delayed in accordance with different angles of incidence, can be fed to each adding means. Clearly, there will be one decimating means associated with each adding means.

Preferably, each time delay means comprises a shift register having a number of elements each for storing an n-bit signal and the beamforming means includes means for tapping register elements to obtain time delayed signals for addition in the adding means. The n-bit signals held in successive elements of the shift register are representations of the signal from the sensor module shifted in phase by 2π /Q. Thus, by tapping a signal from the appropriate element of each shift register a set of signals with the appropriate relative phase changes made to them (in multiples of 2π /Q) can be obtained. The use of the shift registers as time delay means enables a further reduction in the cost and complexity of the beamforming array according to the present invention.

The digitising means preferably includes signal comparing means incorporating an analogue reference voltage wherein the weighting means is arranged to implement non-uniform amplitude weighting by variation of the analogue reference voltage.

Alternatively the weighting means may be arranged to implement non-uniform amplitude weighting by multiplication of the digital signals by a weighting sequence. Such multiplication of the digital signals may be achieved prior to or after tapping the shift register elements.

Preferably, the oversampling factor of the digitising means, Q, is greater than 16 so that the relative differences in phase that can be introduced into the n-bit signals are small enough to allow accurate beamforming. More preferably the oversampling factor, Q, is greater than 32.

In applications where the information flow rate allows, it is preferable to convert the intermediate frequency signal to a one-bit digital signal at the oversampling rate. Clearly, the rate of oversampling is greatest for a one-bit signal and so where the information flow is high the oversampling rate may exceed the capabilities of the digitising hardware and so conversion to a one-bit signal is not possible. The advantage of a conversion to a one-bit digital signal is that it can be manipulated by simple hardware which can be cheap and reliable. For example one-bit shift registers and one-bit adders. Furthermore, in a conventional array with multi-bit analogue to digital converters for each module, the raw digital information would require a multi-pin connector to interface the data to the beamforming processor. Such connections are expensive and can be unreliable in applications where high vibrations are likely to be experienced. Such a connection can be avoided in this preferred embodiment of the present invention because the interface is made at one-bit level which does not require complex hardware. Also, if a wire-less connection is required a simple one-bit optical data link can be used.

More preferably, in the preferred embodiment where one-bit digital signals are used each digitising means comprises the first part and the decimating means comprises the second part of a delta sigma analogue to digital converter. The decimating filter of a delta sigma converter performs an energy averaging process over portions of the one-bit stream from the first part of the converter. This process is linear, as is the process of beamforming, so the beamforming process can be performed on the one-bit data from the first part of the converter, which beamformed data can then be averaged in the decimating filter. The advantages of using delta sigma converters are not lost by splitting the two parts of the converter as in the present invention and JP 3 114 449. These advantages are that delta sigma converters have a high dynamic range which is important in applications which require the operation of the beamforming array in high clutter and electronic interference environments. They also have the advantage of allowing low cost monolithic implementation. Alternatively, the linear digitising means could utilise analogue to digital conversion using direct interpolation as described in US Patent No. 4, 621, 254, entitled "Apparatus and Method for Analogue to Digital Conversion".

In higher information flow applications the trade off between the number of bits and the rate of oversampling makes it is preferable to use a number of bits that is greater than 1. In such applications it is preferable for the digitising means to comprise the first part and the decimating means to comprise the second part of a noise shaping analogue to digital converter.

According to a second aspect of the present invention there is provided a method for digitally beamforming a signal, comprising the steps of:
(a) receiving the incoming signal at a plurality of sensors of a phased array and generating a respective IF signal therefrom at each module,
(b) converting the IF signals to n-bit digital signals at an oversampling rate, where n is less than the number of bits required to represent the dynamic range of the IF signal,
(c) beamforming the n-bit digital signals by altering their relative phases and combining them to form a resultant signal, and
(d) converting the resultant signal to a multi-bit signal of the number of bits required to represent the IF signal dynamic range;
characterised in that the method includes the additional step of applying a non-uniform amplitude weighting to the digital signals prior to forming the resultant signal.

The weighting step may be arranged to counteract variation in sensor characteristics and / or to improve array sidelobe characteristics.

Preferably, the beamforming method includes performing a plurality of additions in each of which signals of a respective set of digital signals are added together as appropriate to form multiple beams.

The beamforming method preferably comprises the steps of time delaying the digital signals in shift registers each having a number of elements, each element being capable of storing an n-bit digital signal and register elements being tapped to obtain time-delayed signals for addition.

The weighting step may be implemented either by varying an analogue reference voltage applied to a signal comparing means within the digitising means or by multiplying the digital signals with a weighting sequence. In the latter alternative the weighting step may implemented prior to tapping the shift register elements and it may be implemented by multiplying each signal stored in respective shift registers with a weighting sequence and overwriting each signal by the respective multiplied signal.

Alternatively tapping the shift register elements may be carried out prior to implementing the weighting step.

The method according to the second aspect of the present invention has the same advantages as are discussed above in relation to the first aspect of the present invention

Embodiments of the present invention will now be described by way of example only with reference to the following drawings in which:
Figure 1 shows a delta-sigma analogue to digital converter, that is used in digitally beamformed arrays.
Figure 2 shows a conventional digitally beamformed array using delta sigma converters.
Figure 3 shows a digitally beamformed array according to the present invention.
Figure 4 shows a noise shaping analogue to digital converter which can be used, in place of the delta sigma converters, in the digitally beamformed array shown in Figure 3, with slight modification to the array.

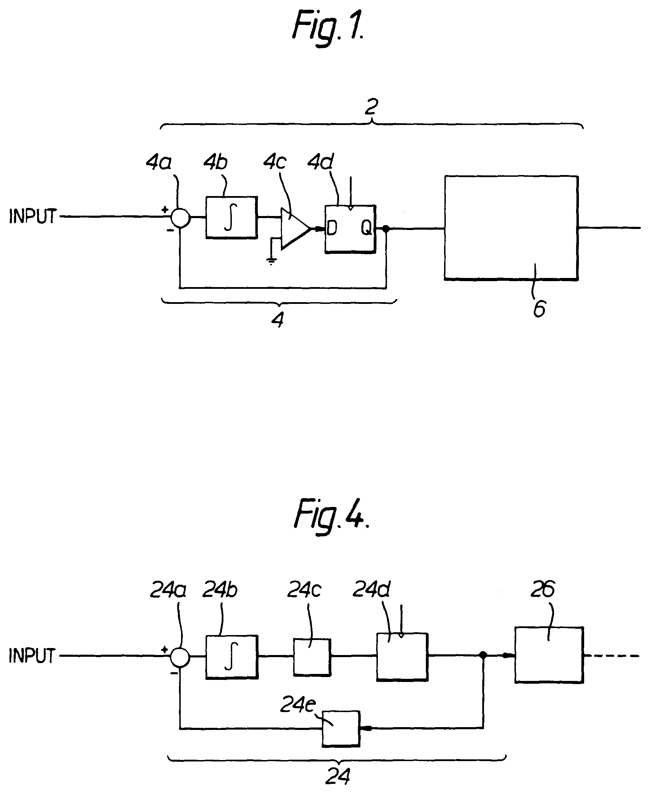

Referring first to Figure 1, the delta sigma converter 2 shown therein can be divided into two parts. The first part is an analogue one-bit sampling loop 4 and is a high speed one-bit analogue to digital convener which samples at a speed many times higher than the sampling rate necessary for the required signal bandwidth. The one-bit sampling loop 4 comprises a subtracting means 4a, an integrator 4b, a comparator 4c (which compares an input signal with an analogue voltage reference level) and a latch circuit 4d, connected in series in a loop. This produces an output from the latch circuit 4d which is a rapid stream of one-bit data at the oversampling rate. In order to produce multi-bit data at the required signal bandwidth, it is necessary to feed this data into the second part of the delta sigma convener, the decimating filter 6. The decimating filter 6 normally comprises a cascade of filters operating at successively lower sampling rates, culminating in the desired multi-bit output.

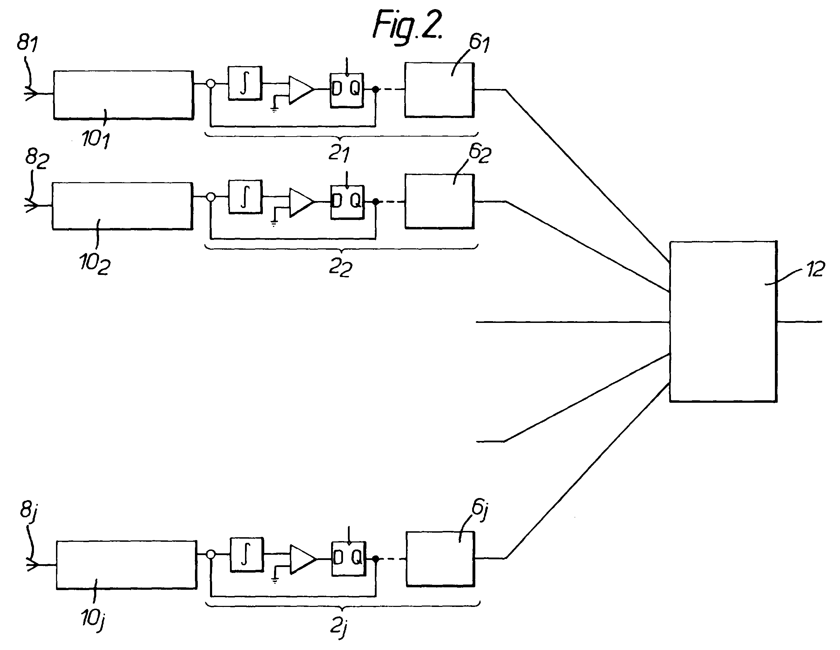

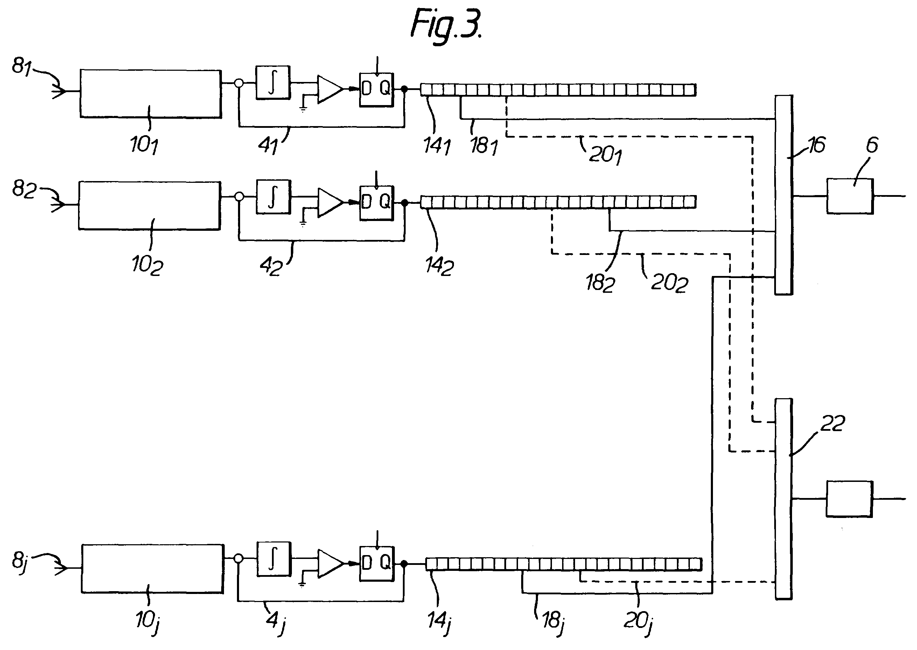

Referring now to Figure 2, this shows a conventional digitally beamformed array comprising an array of j antennae 8₁ to 8ⱼ which are arranged in a straight line. The outputs from each antenna 8₁ to 8ⱼ are fed into respective transmit/receive modules 10₁ to 10ⱼ which each have their own transmitting and receiving circuitry. The intermediate frequency outputs of the transmit/receive modules 10₁ to 10ⱼ are fed into respective delta sigma converters 2₁ to 2ⱼ, which operate as discussed above with reference to Figure 1. The outputs from all the delta sigma converters 2₁ to 2ⱼ are connected to a single digital beamformer 12.

The digitally beamformed array shown in Figure 2 operates in the following way. When a beam is incident on the array of antennae 8₁ to 8ⱼ at an angle q to the array, the signals received by the antennae 8₁ to 8ⱼ are convened to intermediate frequency in the respective transmit receive modules 10₁ to 10ⱼ. The intermediate frequency signals are then digitised by the sigma-delta converters 2₁ to 2ⱼ. Then these digital representations of each of the n received signals are beamformed in the digital beamformer 12, to remove the differences in the phase between the signals, associated with a radar pulse incident at the said angle q. The signal output from the digital beamformer 12 can then be analysed to obtain information about any target that is located in the direction associated with the angle q. The array shown in Figure 2 is complex and relatively expensive because one delta sigma converter is required for each module and the digital beamformer 12 is a complex signal processor which has to be able to carry out high speed complex multiplications on the multi-bit information from the converters.

Referring now to Figure 3 which shows a digitally beamformed array according to the present invention comprising an array of j antennae 8₁ to 8j which are arranged in a straight line, similarly to the array shown in Figure 2. Also similar to the array shown in Figure 2 are the transmit/receive modules 10₁ to 10ⱼ. The intermediate frequency outputs of the transmit receive modules 10₁ to 10ⱼ are fed into the analogue one bit sampling loops 4₁ to 4ⱼ respectively which form the first half of a delta sigma converter 2, as discussed with reference to Figure 1. The oversampled one-bit outputs of the sampling loops 4₁ to 4ⱼ can be regarded as representations of the outputs from the respective antennae 8₁ to 8ⱼ. If the sampling loops 4₁ to 4ⱼ oversample by a factor Q, then successive oversampled outputs can be regarded as being phase shifted by a phase angle p, where$\text{p = 2π/Q}$

If Q is sufficiently large then the process of beamforming can be accomplished by simply adding together suitably time-delayed oversampled outputs of the sampling loops 4₁ to 4ⱼ. Thus the outputs of the sampling loops are fed into shift registers 14₁ to 14ⱼ respectively, each of which is Q elements (each element is able to store a one-bit number) long and the outputs 18₁ to 18ⱼ of appropriate shift register elements are summed in a one-bit beam adder 16. The output of the beam adder 16 is then fed into a decimating filter 6. The output of the decimating filter 6 will be similar to the output of the beamformer 12 of Figure 2 and can be analysed in a similar way to obtain target information. Further adjustment of the relative phases of the signals fed into the beam adder 16 can be obtained by adjusting the relative timing of the clock signals feeding the respective sampling loops 4₁ to 4ⱼ. The output stream from the beam adder 16 will have up to j+l discrete levels and so the common decimating filter 6 will have a more demanding task than the individual decimating filters 6₁ to 6ⱼ of Figure 2.

Multiple beams, for example in monopulse applications, can be simply implemented by incorporating further adders, for example 22 in Figure 3, fed from outputs 20₁ to 20ⱼ of other elements of the shift registers 14₁ to 14ⱼ as shown in Figure 3 in dotted lines.

The digitally beamformed array described above in relation to Figure 3 implements a uniform weighting across the elements that are added in the beam adders 16 (and 22), there being no provision for individually changing the weight given to the individual elements in the addition. In many applications the outputs of the sensor modules are required to be non-uniformly weighted, in order to improve the sidelobes of the resulting pattern. This can be achieved by either varying the analogue voltage reference levels of the individual converters 4₁ to 4ⱼ or alternatively by multiplying the l-bit oversampled outputs of the converters 4₁ to 4ⱼ by a suitable l-bit weighting sequence prior to being fed to the adders 16 (and 22). This latter operation can be either applied before or after the shift registers 14₁ to 14ⱼ depending on whether the same or different weightings are required for the group of signals fed into the different adders 16 and 22.

In some applications, for example, if a very fast information flow is required the trade-off between the number of bits in the oversampled domain and the rate of oversampling is such that a lower sampling rate with more bits is preferred. A type of analogue to digital converter with this property is a noise shaping analogue to digital converter, such as is shown in Figure 4. Such a converter can also be split into a sampling loop 24 and a decimating filter 26 in a similar manner to the delta sigma converter of Figure 1. The sampling loop 24 comprises a subtraction means 24a, an integrator 24b, an n-bit analogue to digital converter 24c, a latch circuit 24d and a digital to analogue converter 24e, connected in series in a loop. The output of the latch circuit 24d is a series of n-bit representations of the signal from the sensor module at an oversampled rate. If the first part of a noise shaping analogue to digital convener, the sampling loop 24, is used to produce an output of n-bit data in place of each one of the sampling loops 4₁ to 4ⱼ in the array shown in Figure 3 then n-bit element shift registers can be used instead of the l-bit element shift registers 14₁ to 14ⱼ and an n-bit adder can be used in place of the one-bit adder 16. A suitable decimating filter 6 could then be used to convert the resulting data to the number of bits required to represent the entire dynamic range of the intermediate frequency signal.

## Claims

1. A digital beamforming array including:
(a) a plurality of sensor modules (8, 10) for generating intermediate frequency (IF) signals from received signals;
(b) digitising means (4) to convert the IF signals to n-bit digital signals at an oversampling rate, where n is less than the number of bits required to represent the IF signal dynamic range;
(c) beamforming means (14, 16) for altering the phases of the digital signals relative to one another and combining them to form a resultant signal; and
(d) decimating means (6) for converting the resultant signal to a multi-bit signal with a number of bits equal to at least that required to represent the IF signal dynamic range;
characterised in that the array also includes weighting means (4c, 14, 16) to provide for the digital signals to incorporate non-uniform weighting prior to formation of the resultant signal.

2. A digital beamforming array according to Claim 1 characterised in that the weighting means (4c, 14, 16) is arranged to provide for non-uniform amplitude weighting to counteract variation in sensor module characteristics.

3. A digital beamforming array according to Claim 1 or 2 characterised in that the weighting means (4c, 14, 16) is arranged to improve array sidelobe characteristics.

4. A digital beamforming array according to Claim 1, 2 or 3 characterised in that the beamforming means (14, 16) includes respective time delay means (14) for each digitising means (4) arranged to delay the digital signals relative to one another and the beamforming means (14, 16) includes at least one adding means (16) arranged to add together signals of a set of delayed signals.

5. A digital beamforming array according to Claim 4 characterised in that the beamforming means (14, 16) includes a plurality of adding means (16) each arranged to add together signals of a respective set of delayed signals as appropriate to form multiple beams.

6. A digital beamforming array according to Claim 4 or 5 characterised in that each time delay means comprises a shift register (14) having a number of elements each for storing an n-bit digital signal and the beamforming means (14, 16) includes means for tapping register elements to obtain time delayed signals for addition in the adding means (16).

7. A digital beamforming array according to any preceding claim characterised in that the digitising means (4) includes signal comparing means including an analogue reference voltage wherein the weighting means (4c) is arranged to implement non-uniform amplitude weighting by variation of the analogue reference voltage.

8. A digital beamforming ray according to any one of Claims 1 to 6 characterised in that the weighting means (14, 16) is ranged to implement non-uniform amplitude weighting by multiplication of the digital signals by a weighting sequence.

9. A digital beamforming array according to Claim 8 when dependent on Claim 6 characterised in that the weighting means is arranged for multiplication of the digital signals prior to tapping the shift register elements.

10. A digital beamforming array according to Claim 8 characterised in that the weighting means is arranged for multiplication of the digital signals after tapping the shift register elements.

11. A digital beamforming array according to any preceding claim characterised in that the factor by which the digitising means oversamples, Q, is greater than 16.

12. A digital beamforming array according to any preceding claim characterised in that n is 1.

13. A digital beamforming array according to Claim 12 characterised in that each digitising means (4) comprises the first part and the decimating means (6) comprises the second part of a delta sigma analogue to digital converter.

14. A digital beamforming array according to any one of Claims 1 to 11 characterised in that n is greater than 1.

15. A digital beamforming array according to Claim 14 characterised in that each digitising means (24) comprises the first part and the decimating means (26) comprises the second part of a noise shaping analogue to digital converter.

16. A method for digitally beamforming a signal, comprising the steps of:
(a) receiving the incoming signal at a plurality of sensors of a phased array and generating a respective IF signal therefrom at each module,
(b) convening the IF signals to n-bit digital signals at an oversampling rate, where n is less than the number of bits required to represent the dynamic range of the IF signal,
(c) beamforming the n-bit digital signals by altering their relative phases and combining them to form a resultant signal, and
(d) converting the resultant signal to a multi-bit signal of the number of bits required to represent the IF signal dynamic range;
characterised in that the method includes the additional step of applying a non-uniform amplitude weighting to the digital signals prior to forming the resultant signal.

17. A method according to Claim 16 characterised in that the weighting step is arranged to counteract variation in sensor characteristics.

18. A method according to Claim 15 or 16 characterised in that the weighting step is arranged to improve array sidelobe characteristics.

19. A method according to Claim 16, 17 or 18 characterised in that beamforming includes performing a plurality of additions in each of which signals of a respective set of digital signals are added together as appropriate to form multiple beams.

20. A method according to Claim 19 characterised in that beamforming includes time delaying the digital signals in shift registers (14) each having a number of elements, each element being capable of storing an n-bit digital signal and register elements being tapped to obtain time-delayed signals for addition.

21. A method according to any one of Claims 16 to 20 characterised in that the weighting step is implemented by varying an analogue reference voltage applied to a signal comparing means (4c) within the digitising means (4).

22. A method according to any one of Claims 16 to 20 characterised in that the weighting step is implemented by multiplying the digital signals with a weighting sequence.

23. A method according to Claim 22 when dependent on Claim 20 characterised in that the weighting step is implemented prior to tapping the shift register elements.

24. A method according to Claim 23 characterised in that the weighting step is implemented by multiplying each signal stored in respective shift registers with a weighting sequence and overwriting each signal by the respective multiplied signal.

25. A method according to Claim 22 when dependent on Claim 20 characterised in that tapping the shift register elements is carried out prior to implementing the weighting step.

## Patentansprüche

1. Digitales Strahlformungsarray mit:
(a) mehreren Sensormodulen (8, 10) zum Erzeugen von Zwischenfrequenzsignalen (IF) aus empfangenen Signalen,
(b) einer Digitalisierungsvorrichtung (4) zum Umwandeln des IF-Signals in digitale n-Bit-Signale mit einer Oversampling-Rate, wobei n kleiner als die Zahl der Bits ist, die erforderlich sind, um den IF-Signal-Dynamikbereich darzustellen,
(c) einer Strahlformungsvorrichtung (14, 16) zum Verändern der Phasen der digitalen Signale in bezug aufeinander und zu ihrem Überlagern, um ein resultierendes Signal zu bilden, und
(d) einer Decimating-Vorrichtung (6) zum Umwandeln des resultierenden Signals in ein Mehr-Bit-Signal mit einer Anzahl von-Bits, die wenigstens gleich der ist, die erforderlich ist, um den IF-Signal-Dynamikbereich darzustellen,
dadurch gekennzeichnet, daß
das Array außerdem eine Wichtungsvorrichtung (4c, 14, 16) umfaßt, um dafür zu sorgen, daß die digitalen Signale eine ungleichförmige Wichtung vor der Bildung des resultierenden Signals erfahren.

2. Digitales Strahlformungsarray nach Anspruch 1, dadurch gekennzeichnet, daß die Wichtungsvorrichtung (4c, 14, 16) dazu dient, eine ungleichförmige Amplitudenwichtung zu bewirken, um Schwankungen bei den Sensormoduleigenschaften entgegenzuwirken.

3. Digitales Strahlformungsarray nach Anspruch 1 oder 2, dadurch gekennzeichnet, daß die Wichtungsvorrichtung (4c, 14, 16) dazu dient, die Seitenkeuleneigenschaften zu verbessern.

4. Digitales Strahlformungsarray nach Anspruch 1, 2 oder 3, dadurch gekennzeichnet, daß die Strahlformungsvorrichtung (14, 16) eine jeweilige Zeitverzögerungsvorrichtung (14) für jede Digitalisierungsvorrichtung (4) umfaßt, um die digitalen Signale in bezug aufeinander zu verzögern, und die Strahlformungsvorrichtung (14, 16) wenigstens eine Addierervorrichtung (16) umfaßt, um die Signale einer Menge von verzögerten Signalen zusammenzuzählen.

5. Digitales Strahlformungsarray nach Anspruch 4, dadurch gekennzeichnet, daß die Strahlformungsvorrichtung (14, 16) mehrere Addierervorrichtungen (16) umfaßt, die jeweils dazu dienen, Signale einer jeweiligen Menge von verzögerten Signalen geeignet zu addieren, um Mehrfachstrahlen zu erzeugen.

6. Digitales Strahlformungsarray nach Anspruch 4 oder 5, dadurch gekennzeichnet, daß jede Zeitverzögerungsvorrichtung ein Schieberegister (14) mit einer Anzahl von Elementen umfaßt, die jeweils zum Speichern eines digitalen n-Bit-Signals dienen, und die Strahlformungsvorrichtung (14, 16) eine Vorrichtung zum Auslesen von Registerelementen umfaßt, um zeitverzögerte Signale für die Addition in der Addierervorrichtung (16) zu erhalten.

7. Digitales Strahlformungsarray nach einem der vorangehenden Ansprüche, dadurch gekennzeichnet, daß die Digitalisierungsvorrichtung (4) eine Signalvergleichsvorrichtung umfaßt, die eine analoge Referenzspannung umfaßt, wobei die Wichtungsvorrichtung (4c) dazu dient, eine ungleichförmige Amplitudenwichtung durch Variation der analogen Referenzspannung zu implementieren.

8. Digitales Strahlformungsarray nach einem der Ansprüche 1 bis 6, dadurch gekennzeichnet, daß die Wichtungsvorrichtung (14, 16) dazu dient, eine ungleichförmige Amplitudenwichtung durch Multiplikation der digitalen Signale mit einer Wichtungssequenz zu implementieren.

9. Digitales Strahlformungsarray nach Anspruch 8, soweit dieser sich auf Anspruch 6 bezieht, dadurch gekennzeichnet, daß die Wichtungsvorrichtung ausgelegt ist für die Multiplikation des digitalen Signals vor dem Auslesen der Schieberegisterelemente.

10. Digitales Strahlformungsarray nach Anspruch 8, dadurch gekennzeichnet, daß die Wichtungsvorrichtung ausgelegt ist für die Multiplikation der digitalen Signale nach Auslesen der Schieberegisterelemente.

11. Digitales Strahlformungsarray nach einem der vorangehenden Ansprüche, dadurch gekennzeichnet, daß der Faktor des Oversampling Q größer als 16 ist.

12. Digitales Strahlformungsarray nach einem der vorangehenden Ansprüche, dadurch gekennzeichnet, daß n gleich 1 ist.

13. Digitales Strahlformungsarray nach Anspruch 12, dadurch gekennzeichnet, daß jede Digitalisierungsvorrichtung (4) den ersten Teil und die Decimating-Vorrichtung (6) den zweiten Teil eines Delta/Sigma-Analog/Digital-Konverters umfaßt.

14. Digitales Strahlformungsarray nach einem der Ansprüche 1 bis 11, dadurch gekennzeichnet, daß n größer als 1 ist.

15. Digitales Strahlformungsarray nach Anspruch 14, dadurch gekennzeichnet, daß jede Digitalisierungsvorrichtung (24) den ersten Teil und die Decimating-Vorrichtung (26) den zweiten Teil eines rauschfilternden Analog/Digital-Konverters umfaßt.

16. Verfahren für das digitale Strahlformen eines Signals mit den Schritten:
(a) Empfangen des bei mehreren Sensoren eines phasengesteuerten Arrays ankommenden Signals und Erzeugen eines jeweiligen IF-Signals davon bei jedem Modul,
(b) Wandeln des IF-Signals in digitale n-Bit-Signale mit einer Oversampling-Rate, wobei n kleiner als die Zahl der Bits ist, die erforderlich ist, um den Dynamikbereich des IF-Signals darzustellen,
(c) Strahlformen der digitalen n-Bit-Signale durch Ändern ihrer relativen Phasen und Überlagern von ihnen, um ein resultierendes Signal zu erzeugen, und
(d) Wandeln des resultierenden Signals in ein Mehr-Bit-Signal mit der Anzahl von-Bits, die erforderlich ist, um den Dynamikbereich des IF-Signals darzustellen,
dadurch gekennzeichnet, daß
das Verfahren als zusätzlichen Schritt das Anwenden einer ungleichförmigen Amplitudenwichtung auf die digitalen Signale vor Bilden des resultierenden Signals umfaßt.

17. Verfahren nach Anspruch 16, dadurch gekennzeichnet, daß der Wichtungsschritt ausgelegt ist, Schwankungen der Sensoreigenschaften entgegenzuwirken.

18. Verfahren nach Anspruch 15 oder 16, dadurch gekennzeichnet, daß der Wichtungsschritt ausgelegt ist, die Seitenkolbeneigenschaften des Arrays zu verbessern.

19. Verfahren nach Anspruch 16, 17 oder 18, dadurch gekennzeichnet, daß das Strahlformen das Ausführen mehrerer Additionen umfaßt, wobei bei jeder Signale einer jeweiligen Menge von digitalen Signalen je nach Eignung zusammengezählt werden, um Mehrfachstrahlen zu bilden.

20. Verfahren nach Anspruch 19, dadurch gekennzeichnet, daß das Strahlformen ein Zeitverzögern der digitalen Signale in Schieberegistern (14) umfaßt, wobei jedes eine Anzahl von Elementen umfaßt, wobei jedes Element dazu geeignet ist, digitale n-Bit-Signale abzuspeichern, und wobei Registerelemente ausgelesen werden, um zeitverzögerte Signale für die Addition zu erhalten.

21. Verfahren nach einem der Ansprüche 16 bis 20, dadurch gekennzeichnet, daß der Wichtungsschritt implementiert wird, indem eine analoge Referenzspannung, die an der Signalvergleichsvorrichtung (4c) innerhalb der Digitalisierungsvorrichtung (4) anliegt, variiert wird.

22. Verfahren nach einem der Ansprüche 16 bis 20, dadurch gekennzeichnet, daß der Wichtungsschritt implementiert wird durch Multiplizieren der digitalen Signale mit einer Wichtungssequenz.

23. Verfahren nach Anspruch 22, soweit dieser sich auf Anspruch 20 bezieht, dadurch gekennzeichnet, daß der Wichtungsschritt implementiert wird vor dem Auslesen der Schieberegisterelemente.

24. Verfahren nach Anspruch 23, dadurch gekennzeichnet, daß der Wichtungsschritt implementiert wird durch Multiplizieren jedes Signals, das in den jeweiligen Schieberegistern abgespeichert ist, mit einer Wichtungssequenz und Überschreiben jedes Signals durch das jeweilige multiplizierte Signal.

25. Verfahren nach Anspruch 22, soweit er sich auf Anspruch 20 bezieht, dadurch gekennzeichnet, daß das Auslesen der Schieberegisterelemente ausgeführt wird vor dem Implementieren des Wichtungsschrittes.

## Revendications

1. Groupement à déphasage numérique comportant :
(a) une pluralité de modules de détection (8, 10) pour générer des signaux de fréquence intermédiaire (IF) à partir des signaux reçus,
(b) des moyens de numérisation (4) pour convertir les signaux IF en signaux numériques de n bits à une fréquence de suréchantillonnage, où n est inférieur au nombre de bits nécessaire pour représenter la plage dynamique des signaux IF,
(c) des moyens de déphasage (14, 16) pour modifier les phases des signaux numériques les unes par rapport aux autres et les combiner afin de former un signal résultant, et
(d) des moyens décimant (6) pour convertir le signal résultant en un signal multi-bit ayant un nombre de bits égal au moins à celui nécessaire pour représenter la plage dynamique des signaux IF,
caractérisé en ce que le groupement comporte également des moyens de pondération (4c, 14, 16) pour que les signaux numériques incorporent une pondération non-uniforme avant la formation du signal résultant.

2. Groupement à déphasage numérique selon la revendication 1, caractérisé en ce que les moyens de pondération (4c, 14, 16) sont agencés pour fournir une pondération d'amplitude non-uniforme afin de contrecarrer la variation des caractéristiques des modules de détection.

3. Groupement à déphasage numérique selon la revendication 1 ou 2, caractérisé en ce que les moyens de pondération (4c, 14, 16) sont agencés pour améliorer les caractéristiques des lobes latéraux du groupement.

4. Groupement à déphasage numérique selon la revendication 1, 2 ou 3, caractérisé en ce que les moyens de déphasage (14, 16) comportent des moyens de temporisation respectifs (14) pour chacun des moyens de numérisation (4) agencés pour retarder les signaux numériques les uns par rapport aux autres, et les moyens de déphasage (14, 16) comportent au moins des moyens d'addition (16) agencés pour additionner ensemble des signaux d'un ensemble de signaux retardés.

5. Groupement à déphasage numérique selon la revendication 4, caractérisé en ce que les moyens de déphasage (14, 16) comportent une pluralité de moyens d'addition (16) chacun agencé pour additionner ensemble des signaux d'un ensemble respectif de signaux retardés de manière appropriée pour former de multiples faisceaux.

6. Groupement à déphasage numérique selon la revendication 4 ou 5, caractérisé en ce que chacun des moyens de temporisation comportent un registre à décalage (14) ayant de nombreux éléments destinés chacun à mémoriser un signal numérique de n bits, et les moyens de déphasage (14, 16) comportent des moyens pour prélever des éléments de registre afin d'obtenir des signaux retardés dans le temps pour les additionner dans les moyens d'addition (16).

7. Groupement à déphasage numérique selon l'une quelconque des revendications précédentes, caractérisé en ce que les moyens de numérisation (4) comportent des moyens de comparaison de signaux incluant une tension de référence analogique, dans lequel les moyens de pondération (4c) sont agencés pour effectuer une pondération d'amplitude non-uniforme en faisant varier le signal de référence analogique.

8. Groupement à déphasage numérique selon l'une quelconque des revendications 1 à 6, caractérisé en ce que les moyens de pondération (14, 16) sont agencés pour effectuer une pondération d'amplitude non-uniforme en multipliant les signaux numériques par une séquence de pondération.

9. Groupement à déphasage numérique selon la revendication 8, lorsqu'elle est dépendante de la revendication 6, caractérisé en ce que les moyens de pondération sont agencés pour multiplier les signaux numériques avant de prélever les éléments de registre à décalage.

10. Groupement à déphasage numérique selon la revendication 8, caractérisé en ce que les moyens de pondération sont agencés pour multiplier les signaux numériques après le prélèvement des éléments de registre à décalage.

11. Groupement à déphasage numérique selon l'une quelconque des revendications précédentes, caractérisé on ce que le facteur, Q, par lequel les moyens de numérisation suréchantillonnent est plus grand que 16.

12. Groupement à déphasage numérique selon l'une quelconque des revendications précédentes, caractérisé on ce que n est égal à 1.

13. Groupement à déphasage numérique selon la revendication 12, caractérisé en ce que chacun des moyens de numérisation (4) comporte la première partie et les moyens décimant (6) comportent la seconde partie d'un convertisseur analogique-numérique delta-sigma.

14. Groupement à déphasage numérique selon l'une quelconque des revendications 1 à 11, caractérisé on ce que n est supérieur à 1.

15. Groupement à déphasage numérique selon la revendication 14, caractérisé on ce que chacun des moyens de numérisation (24) comporte la première partie et les moyens décimant (26) comportent la seconde partie d'un convertisseur analogique-numérique de mise on forme de bruit.

16. Procédé pour déphaser numériquement un signal, comportant les étapes consistant à :
(a) recevoir le signal entrant au niveau d'une pluralité de capteurs d'un dispositif à balayage électronique et générer un signal IF respectif à partir de celui-ci au niveau de chaque module,
(b) convertir les signaux IF en signaux numériques de n bits à une fréquence de suréchantillonnage, où n est inférieur au nombre de bits nécessaire pour représenter la plage dynamique du signal IF,
(c) déphaser les signaux numériques de n bits on modifiant leurs phases relatives et on les combinant pour former un signal résultant, et
(d) convertir le signal résultant en un signal multi-bit ayant le nombre de bits nécessaire pour représenter la plage dynamique du signai IF,
caractérisé en ce que le procédé comporte l'étape supplémentaire consistant à appliquer une pondération d'amplitude non-uniforme aux signaux numériques avant de former le signal résultant.

17. Procédé selon la revendication 16, caractérisé en ce que l'étape de pondération est conçue pour contrecarrer une variation des caractéristiques des capteurs.

18. Procédé selon la revendication 15 ou 16, caractérisé en ce que l'étape de pondération est conçue pour améliorer les caractéristiques de lobes latéraux du groupement.

19. Procédé selon la revendication 16, 17 ou 18, caractérisé en ce que le déphasage inclut d'effectuer une pluralité d'additions dans chacune desquelles des signaux d'un ensemble respectif de signaux numériques sont additionnés ensemble de manière appropriée pour former de multiples faisceaux.

20. Procédé selon la revendication 19, caractérisé en ce que le déphasage inclut de retarder dans le temps les signaux numériques dans des registres à décalage (14) ayant chacun de nombreux éléments, chaque élément étant capable de mémoriser un signal numérique de n bits et les éléments de registre étant prélevés pour obtenir des signaux retardés dans le temps dans le but de les additionner.

21. Procédé selon l'une quelconque des revendications 16 à 20, caractérisé en ce que l'étape de pondération est effectuée en faisant varier une tension de référence analogique appliquée à des moyens de comparaison de signaux (4c) situés dans les moyens de numérisation (4).

22. Procédé selon l'une quelconque des revendications 16 à 20, caractérisé en ce que l'étape de pondération est effectuée en multipliant les signaux numériques par une séquence de pondération.

23. Procédé selon la revendication 22, lorsqu'elle est dépendante de la revendication 20, caractérisé en ce que l'étape de pondération est effectuée avant de prélever les éléments de registre à décalage.

24. Procédé selon la revendication 23, caractérisé en ce que l'étape de pondération est effectuée en multipliant chaque signal mémorisé dans des registres à décalage respectifs par une séquence de pondération et en écrasant chaque signal par le signal multiplié respectif.

25. Procédé selon la revendication 22, lorsqu'elle est dépendante de la revendication 20, caractérisé en ce que le prélèvement des éléments de registre à décalage est effectué avant d'effectuer l'étape de pondération.
